# EUROPEAN PATENT APPLICATION

(11) **EP 3 725 916 A1**
(43) Date of publication of application: **21.10.2020**
(21) Application number: 19170413.9
(22) Date of filing: 19.04.2019
(51) Int. Cl.: C25B 1/08, C25B 9/20

(54) **IMPROVED ELEKTROLYSIS PLATE**

(71) Applicant: Ecovitus B.V., 1401 GG Bussum (NL)
(72) Inventor: HUIJBOOM, Ronald Hendrikus, 1401 GG Bussum (NL)
(74) Representative: Plaggenborg, Menko Bernard

(57) **Abstract**

The invention relates to an electrolysis plate for performing an electrolysis method, said electrolysis plate comprising an electrically conductive plate member with a through opening for transporting a gas through said opening from one side of said electrolysis plate to another side thereof, wherein an edge surface of said through opening in said electrically conductive plate member comprises a cover of a non-electrically conductive material.

A preferred embodiment comprises an electrolysis device comprising a multitude of electrolysis plates according to any of the preceding claims, wherein said plates are positioned parallelly in a housing of said device, defining spaces between adjacent plates.

## Description

The present invention relates to an electrolysis plate with improved arcing behavior according to the preamble of claim 1.

It is known in the art to perform electrolysis in cells. According to this known method a plurality of electrolysis plates (a stack) is contained in a housing with a liquid to be electrolysed, like water. The liquid optionally contains additives to enhance electrolysis. The plates are positioned parallelly and are optionally interspersed by membranes. Electrolysis plates or the sides thereof are alternately charged positive and negative; hence one or more cathodes are surrounded by one or more anodes in a stack within the housing. The optional membranes allow electrons or positively charged hydrogen atoms to be transported between two consecutive electrolysis plates. When performing electrolysis on water, hydrogen gas is produced at a negatively charged plate (cathode) whereas oxygen gas is produced at a positively charged plate (anode), and so on.

The gas produced is removed at a top side of the housing. To that end, the electrolysis plates are provided with a through opening at a top part to transport the gas to a gas exhaust which is usually provided at an end of the housing. At the same time, a through opening is provided at a bottom part of the electrolysis plates to transport the liquid to be electrolysed through the housing to ensure that sufficient liquid is present between each pair of electrolysis plates.

Such known device provides disadvantages when performing an electrolysis method. For, due to the relatively high voltage and close mutual positioning of consecutive electrolysis plates arcing may occur. Such arcing occurs predominantly, if not only, at edges of the through openings. It is evident that such arcing has a huge negative influence on the efficiency of the electrolysis method. It may even lead to outage of the complete electrolysis installation and poses a major fire hazard.

A solution for this problem is not known.

The invention aims at providing an improved electrolysis plate of the kind mentioned in the preamble.

The invention further aims at providing an improved electrolysis plate that enhances safety when using same.

The invention also aims at providing an improved electrolysis plate that increases efficiency when using the plate.

According to another aspect, the invention aims at providing an improved device for performing an electrolysis method applying the electrolysis plate according to the invention.

So as to obtain at least one of the above mentioned aims, the invention provides an improved electrolysis plate as mentioned in claim 1. This electrolysis plate has the advantage that efficiency is increased tremendously. No electric power is lost by arcing between adjacent plates.

It has also shown that the electrolysis plate according to the present invention increases safety by eliminating any chance of fire hazard. Also, due to the fact that no arcing is obtained, there is less heat development inside the electrolysis device which increases the lifespan of the device. This synergistic effect is surprising and advantageous.

The invention therefore relates to an electrolysis plate for performing an electrolysis method, said electrolysis plate comprising an electrically conductive plate member with a through opening for transporting a gas through said opening from one side of said electrolysis plate to another side thereof, wherein the electrolysis plate is characterized in that an edge surface of said through opening in said electrically conductive plate member comprises a cover of a non-electrically conductive material. This simple placing of a non-electrically conductive material provides the advantage that arcing no longer occurs. Hence, the electrical efficiency is highly improved, whereas at the same time chance of fire has been eliminated.

According to a preferred embodiment, the cover comprises a rubber or plastic material. It has shown that such material can be easily applied to the electrically conductive plate member providing a durable protection against arcing. Non-electrically conductive materials such as rubber and plastic materials, also withstand a water environment without losing its effectivity.

Although it is possible to provide a cover at a single side of the electrically conductive plate, eliminating arcing from that protected side towards an adjacent plate it may be desirable, so as to improve the overall efficiency, that the cover is placed at both sides of said electrolysis plate. In such embodiment optimal protection towards both adjacent plates is obtained completely eliminating the chance of arcing.

It is especially preferred, that within a perimeter of said through opening a material part extends from one side of said plate to another side thereof. As a result the electrically conductive material, at the position within the perimeter of said through opening, is shielded from its surroundings by means of said cover. It has shown that especially the material within the perimeter of the through opening and the edge between said material part and the side surface of the plate is susceptible to arcing.

An efficient positioning providing an optimum in electric shielding and long-lasting activity is obtained when the cover is shaped substantially in accordance with the through opening's shape, such that it abuts a perimeter of said through opening as well as part of said sides adjacent said opening.

A simple and cheap solution against the drawbacks of electrolysis plates in the state of the art is obtained when the cover is a permanently deformable tape that is connected to said electrically conductive plate member at the opening's perimeter by means of an adhesive. For example, an adhesive tape may be used which can be attached to the electrolysis plates easily and quickly.

An enhanced electrolysis effect is obtained when a surface of said electrically conductive plate member is provided with a structuring or brushing with a height of unevenness of less than 0.3 mm, preferably less than 0.1 mm, more preferably less than 0.05 mm. This improves the electrical efficiency due to the enlarged surface area obtained by the surface structure and also increases the ability of the gas produced by the electrolysis process to release from the surface. Hence, the present invention is improved by this amendment of the electrolysis plate.

According to another aspect the present invention relates to an electrolysis device comprising a multitude of electrolysis plates according to any of the preceding claims, wherein said plates are positioned parallelly in a housing of said device, defining spaces between adjacent plates. This device provides the advantages mentioned above with respect to the electrolysis plate according to the invention.

When placing the electrolysis plates in the device, the covers extend a little bit from the surface of the electrolysis plates. As a consequence, the plates must be positioned sufficiently far apart from each other, providing sufficient space in between each set of adjacent plates, that gas produced during the electrolysis process can be transported out of said space through the through openings. However, placing a maximum number of plates in the device would increase efficiency. To obtain maximum efficiency, it is preferred that openings of adjacent electrolysis plates are offset with respect to each other, such that a continuous passage is obtained through adjacent plates and a mutual fluid communication between multiple spaces is obtained. The plates may be positioned close to each other, covers of adjacent plates contacting each other but still maintaining an escape route for the gases and water.

According to a preferred embodiment of the device, covers of adjacent plates do not contact each other, providing an optimum escape route.

The electrolysis plates are held firmly in the device, when the device comprises receiving means for receiving part of side edges of electrolysis plates for parallelly positioning said electrolysis plates with respect to each other.

Hereafter, the invention will be further described by means of a drawing. The drawing shows in:
Fig. 1 a schematic perspective view of a couple of electrolysis plates according to the invention,
Fig. 2 a cover as part of an electrolysis plates according to the invention,
Fig. 3 a sectional side view of the cover according to Fig. 2,
Fig. 4 a side view of the electrolysis plates according to Fig. 1 and
Fig. 5 a top view of the electrolysis plates according to Fig. 1.

The same and similar parts and features have been denoted by the same reference numerals in the figures. However, for ease of understanding the figures, not all parts that are required for a practical embodiment have been shown in the figures.

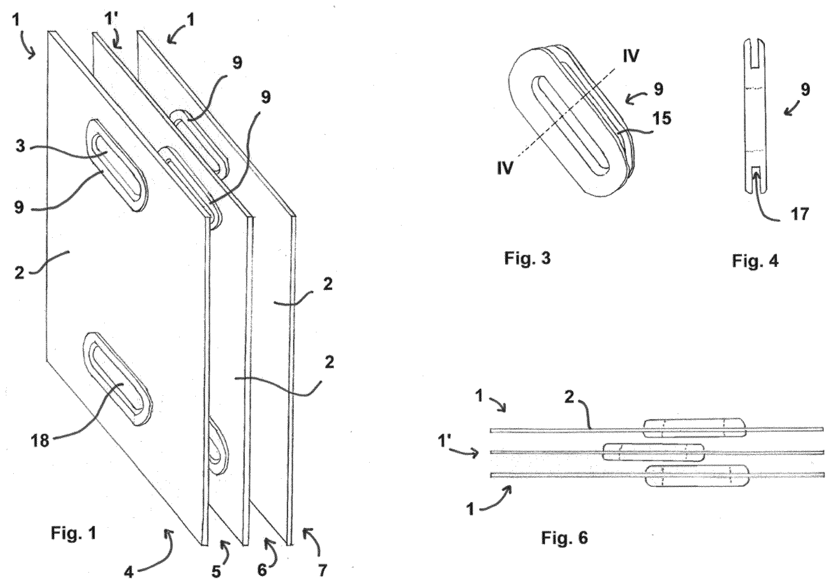

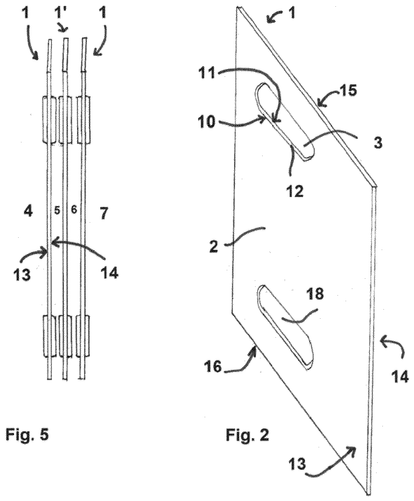

Fig. 1 shows a schematic perspective view of a couple of electrolysis plates 1, 1' according to the invention. Each electrolysis plate 1, 1' is comprised of an electrically conductive plate member 2 with a through opening 3 for transporting a gas through said opening from one side of said electrolysis plate 1, 1' to another side thereof, i.e., from 4 to 5, from 5 to 6, from 6 to 7 and so on, dependent on the number of electrolysis plates placed adjacent and parallel to each other in a device. Cathode plates 1 and anode plates 1' are alternately placed in the liquid to be electrolyzed. When performing an electrolysis process by means of the electrolysis plates 1, 1' according to the invention on, for example, water, hydrogen gas is produced at a negatively charged plate 1 (cathode) whereas oxygen gas is produced at a positively charged plate 1' (anode). As visible in Fig. 1, as well as in Fig. 3, an edge surface of said through opening in said electrically conductive plate member comprises a cover 9 of a non-electrically conductive material. The electrically conductive plate member 2 without a cover 9 is shown in Fig. 2, showing the edge surface 10 of said through opening 3 in the electrically conductive plate member 2. More in particular, Fig. 2 shows that within a perimeter 11 of said through opening 3 defined by the electrically conductive plate member 2 there is a material part 12 extending from one side 13 of said plate to another side 14 thereof.

As can be seen in Fig. 3 and Fig. 4, the cover 9 is shaped substantially in accordance with the through opening's 3 shape, such that it abuts with its surface part 17 the perimeter 11 of said through opening 3, i.e. material part 12 of plate member 2, as well as part of said side surfaces 13, 14 adjacent said opening 3.

Fig. 5 shows a side view of the electrolysis plates 1, 1' according to Fig. 1. It can be seen that the openings 3 in the plates 1, 1' are at a same height, both the openings 3 near a top 15 of the plates 1, 1' and the openings 18 near a bottom 16 of the plates 1, 1'. From Fig. 6 it is clear that the openings both at the top and at the bottom are offset with respect to each other so as to provide for a transport route and to allow gas at the top and liquid at the bottom to travel from one space between two plates to an adjacent space between one of said plates and another adjacent plate.

The invention is not limited to the embodiments as mentioned above and as shown in the drawings. The invention is limited by the claims only.

The invention also relates to all combinations of features described here independently of each other.

## Claims

1. An electrolysis plate for performing an electrolysis method, said electrolysis plate comprising an electrically conductive plate member with a through opening for transporting a gas through said opening from one side of said electrolysis plate to another side thereof, **characterized in that** an edge surface of said through opening in said electrically conductive plate member comprises a cover of a non-electrically conductive material.

2. Electrolysis plate according to claim 1, wherein said cover comprises a rubber or plastic material.

3. Electrolysis plate according to claim 1, wherein said cover is placed at both sides of said electrolysis plate.

4. Electrolysis plate according to claim 1, within a perimeter of said through opening a material part extending from one side of said plate to another side thereof.

5. Electrolysis plate according to claim 1, wherein the cover is shaped substantially in accordance with the through opening's shape, such that it abuts a perimeter of said through opening as well as part of said sides adjacent said opening.

6. Electrolysis plate according to claim 1, wherein the cover is a permanently deformable tape that is connected to said electrically conductive plate member at the opening's perimeter by means of an adhesive.

7. Electrolysis plate according to claim 1, wherein a surface of said electrically conductive plate member is provided with a structuring or brushing with a height of unevenness of less than 0.3 mm, preferably less than 0.1 mm, more preferably less than 0.05 mm.

8. An electrolysis device comprising a multitude of electrolysis plates according to any of the preceding claims, wherein said plates are positioned parallelly in a housing of said device, defining spaces between adjacent plates.

9. An electrolysis device according to any claim 8, wherein openings of adjacent electrolysis plates are offset with respect to each other, such that a continuous passage is obtained through adjacent plates and a mutual fluid communication between multiple spaces is obtained.

10. An electrolysis device according to claim 9, wherein covers of adjacent plates do not contact each other.

11. An electrolysis device according to any of claims 8-10, comprising receiving means for receiving part of side edges of electrolysis plates for parallelly positioning said electrolysis plates with respect to each other.
